Europäisches Patentamt

European Patent Office

Office européen des brevets

(19)

(11) Veröffentlichungsnummer: **0 032 545**
**B1**

(12) **EUROPÄISCHE PATENTSCHRIFT**

(45) Veröffentlichungstag der Patentschrift: **20.02.85**

(21) Anmeldenummer: **80107486.5**

(22) Anmeldetag: **29.11.80**

(51) Int. Cl.⁴: **B 01 J 3/06**

(54) Verfahren und Vorrichtung zur Umwandlung von Stoffen unter Anwendung hoher Drucke und Temperaturen.

(30) Priorität: **20.12.79 SE 7910512**

(43) Veröffentlichungstag der Anmeldung:
**29.07.81 Patentblatt 81/30**

(45) Bekanntmachung des Hinweises auf die
Patenterteilung:
**20.02.85 Patentblatt 85/08**

(84) Benannte Vertragsstaaten:
**AT BE CH DE FR GB IT LI LU NL SE**

(56) Entgegenhaltungen:
**FR-A-1 306 951**
**FR-A-1 371 194**
**GB-A-1 386 241**
**US-A-3 407 445**

(73) Patentinhaber: **F. D. International Ltd.**
**Newman House Russell Parade, Golders Green**
**London N.W. 11 (GB)**

(72) Erfinder: **Von Platen, Baltzar, Dipl.-Ing.**
**Salomon-Smith-Väg 8**
**S-27100 Ystad (SE)**

(74) Vertreter: **Patentanwälte Dipl.-Ing. R. Schlee**
**Dipl.-Ing. A. Missling**
**Bismarckstrasse 43**
**D-6300 Giessen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Erdingung bezieht sich auf ein Verfahren zur Umwandlung von Stoffen unter Anwendung derart hoher Drucke und hoher Temperaturen, wie sie zur Umwandlung von Graphit in Diamant erforderlich sind, in der Weise, daß der umzuwandelnde Stoff in einer aus festen und beweglichen Stahlkörpern zusammengesetzten Hochdruckkammer mit Hilfe einer auf die beweglichen Teile der Kammer einwirkenden Presse unter Druck gesetzt und durch ein in der Kammer befindliches Heizelement erhitzt wird, das von der Kammerwandung durch ein wärmeisolierendes Mittel getrennt wird, wobei der in der Kammer mit Hilfe der Presse erzeugte Druck durch Erhitzen eines in der Kammer befindlichen Druckerzeugungsstoffes erhöht oder zumindest aufrechterhalten wird.

Bei einem bekannten Verfahren dieser Art (FR—A—1 306 951) werden als Druckerzeugungsstoffe Metalloxide, wie Al$_2$O$_3$, BeO, MgO, CaO, ThO$_2$, U$_3$O$_8$, TiO$_2$, ZrO$_2$ und HfO$_2$, hochschmelzende Materialien, wie CaO.SiO$_2$; Al$_2$O$_3$.SiO$_2$ und MgO.SiO$_2$, Metalle wie Fe, Ni, Co, Rh, Ru, Os, Pt, Cr, Mn, Ir, V, W, B, Be, Pd, Nb und Mo und verschiedene Metallkarbide empfohlen.

Für die Durchführung des Verfahrens ist in der genannten Druckschrift eine Vorrichtung beschrieben mit einer aus festen Stahlkörpern und beweglichen Stahlkörpern zusammmengesetzten Hochdruckkammer, auf die beweglichen Teile der Hochdruckkammer einwirkende Preßstempel, in der Hochdruckkammer angeordnete Heizelemente, die von der aus den Stahlkörpern gebildeten Kammerwandung durch ein wärmeisolierendes Mittel getrennt sind und mit einer Kühleinrichtung. Hierbei besteht die Kühleinrichtung aus Kühlleitungen, die in Kühlkammern einmünden, die einerseits von die Reaktionskammer umgebenden Verstärkungsringen und andererseits von Verstärkungsringen für Pressenstempel begrenzt sind. Das Kühlmittel kommt auch mit wärmeisolierenden Teilen in Berührung. Die wärmeisolierenden Teile liegen der Hochdruckkammer am nächsten, können aber wegen ihrer isolierenden Eigenschaften nur wenig Wärme ableiten. Die Berührungsstellen zwischen Pressenstempel und Kühlmittel sind von der Reaktionskammer verhältnismäßig weit entfernt. Bei der bekannten Vorrichtung werden deshalb verhältnismäßig große Bereiche der Vorrichtung stark erwärmt, wodurch deren Festigkeit herabgesetzt wird. Dies begrenzt wiederum die Größe der Reaktionskammer, da die mögliche Größe stark von der Festigkeit des Baumaterials abhängig ist.

Der Erfindung liegt die erste Aufgabe zugrunde, für ein Verfahren der eingangs genannten Art einen Druckerzeugungsstoff vorzuschlage, der billig ist und dessen physikalische Eigenschaften für die Verwendung bei der Umwandlung von Graphit in Diamant besonders günstig sind. Der Erfindung liegt die zweite Aufgabe zugrunde, bei einer Vorrichtung der genannten Art die Kühleinrichtung so auszubilden, daß möglichst kleine Bereiche der Vorrichtung erhitzt werden.

Die erste Aufgabe wird nach der Erfindung dadurch gelöst, daß als Druckerzeugungsstoff Kochsalz in die Kammer eingebracht wird.

Kochsalz hat besonders günstige physikalische Eigenschaften für die Herstellung von Diamanten. Bei konstantem Volumen, das ja bei der Druckerhöhung im wesentlichen besteht, befindet sich Kochsalz in Temperaturbereichen über 1.200 °C und bei Drucken über 50 kbar, also in einem für die Diamantherstellung brauchbaren Bereich, im festen Aggregatzustand. Der feste Aggregatzustand des Kochsalzes unter den Bedingungen des Umwandlungsprozesses hat den großen Vorteil, daß Dichtungsprobleme und Korrosionsprobleme vermieden werden. Es lieft jedoch auch im Rahmen der Erfindung, die Prozeßbedingungen so zu wählen, daß das Kochsalz den flüssigen Aggregatzustand einnimmt. Dies hat den Vorteil, daß die Druckzunahme bei Temperatursteigerung größer ist.

Die zweite Aufgabe wird nach der Erfindung dadurch gelöst, daß in dem die Hochdruckkammer bildenden Stahlkörper und in den Preßstempeln Kühlkanäle für die Aufnahme eines flüssigen Kühlmittels angeordnet sind.

Durch die Heranführung des Kühlmittels unmittelbar an die die Druckzone umgebende Kammerwandung erreicht man, daß in der Reaktionskammer entstehende Wärme auf einem sehr kurzen Weg in das Kuhlmittel gelangt. Dadurch wird eine unzuträgliche Erhitzung der Baumaterialien der Vorrichtung vermieden, so daß eine hohe Festigkeit erhalten bleibt. Dies gestattet es, die Umwandlungsbedingungen (Druck und Temperatur) lange Zeit aufrechtzuerhalten, wodurch die Ausbeute an Diamanten vergrößert wird. Durch die intensive Wärmeabfuhr aus der Reaktionskammer kann auch die Schicht aus wärmeisolierendem Material dünn gehalten werden, wodurch mehr Platz für umzuwandelndes Material geschaffen wird. Auch sind durch die gute Kühlung der Baumaterialien relativ große Reaktionskammern möglich, so daß im Vergleich mit bekannten Vorrichtungen mit einer Charge ein Vielfaches, z. B. das Hundertfache, der bisher möglichen Diamantmenge gewonnen werden kann.

Besonders vorteilhaft ist es, die Kühlkanäle gemäß Anspruch 3 zwischen zwei Stahlkörpern anzuordnen. Damit lassen sich große Kühlflächen erreichen, ohne daß viele dünne Bohrungen hergestellt werden müssen. Die Abstützung der Stahlkörper gegeneinander kann durch separate Stützkörper (Ansprüche 4 bis 6) erfolgen oder aber durch Teile der beiden Stahlkörper selber (Anspruch 7).

In der Zeichnung sind Ausführungsbeispiele einer Vorrichtung für die Umwandlung von Stoffen unter Anwendung hoher Drucke und hoher Temperaturen schematisch dargestellt. Es zeigen:
Fig. 1 einen Schnitt durch ein Kühlsystem mit Stützkörpern in Ansicht,
Fig. 2 einen Schnitt durch ein zweites Kühlsystem mit konischen Stützkörpern,

Fig. 3 einen Längsschnitt durch eine Hochdruckkammer mit einem Kühlsystem gemäß der Erfindung und

Fig. 4 einen Querschnitt durch die Kammer nach Fig. 3 in Pfeilrichtung gesehen.

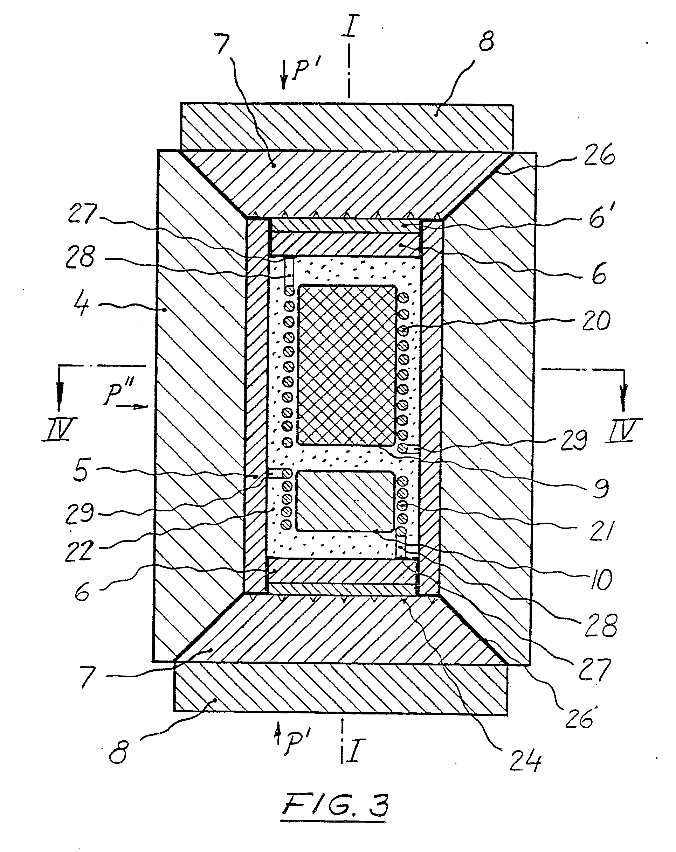

Wie Fig. 3 und 4 zeigen, besteht die Hochdruckkammer aus zylindrischen Stahlkörpern 5 und aus segmentförmigen zylindrischen Stahlkörpern 4. Der Stahlkörper 5 ist relativ dünnwandig, z. B. 3 bis 4 mm stark, und besteht aus einem hochfesten, aber elastischen Stahl. Die Stahlkörper 4 sind Stahlblöcke und dienen zur Abstützung des Zylinders 5 längs seines Außenmantels. Mit 6 und 6' sind zwei bewegliche Stahlkörper bezeichnet, die als Kolbenpaare ausgebildet sind und die vom Zylinder 5 gebildete Hochdruckkammer unten und oben abschließen. Die Trennflächen 4' der Segmente 4 liegen je in einer Ebene, die durch die Längsachse des Zylinders 5 geht. Die Segmente sitzen in einem oder in mehreren nicht gezeichneten massiven Ringen und werden zusammen mit diesen Ringen in das Gestell einer Presse eingesetzt, deren Preßstempel mit 7 und 8 bezeichnet sind. Der Aufbau solcher Pressen ist an sich bekannt und in der Literatur mehrfach beschrieben, u. a. in der Broschüre "MODERN VERY HIGH PRESSURE TECHNIQUES", herausgegeben von R. H. Wentorf, Jr., Ph., D. Research Associate General Electric Research Laboratory, Schenectady, New York/USA, veröffentlicht von Butterworths 1962, 88 Kingsway, London WC2.

Dir Preßstempel 7 sind in gleicher Weise konisch ausgebildet wie die Stirnseiten der Segmente 4. In der in Fig. 3 gezeichneten Endstellung liefen die Stempel 7 auf den konischen Stirnflächen der Segmente 4 auf. Der Antrieb der Stempel 7, 8 erfolgt durch hydraulische Zylinder, die in der Presse angeordnet sind.

Die Hochdruckkammer ist mit einem Kühlsystem ausgerüstet, das entsprechend dem in Fig. 2 dargestellten ausgebildet ist. Es besteht im Prinzip aus den beiden Stahlkörpern 5 und 4. Der Stahlkörper 5 ist gerieft, die Riefen sind mit 23 bezeichnet, Zwischen den Riefen 23 verbleiben konische Wandteile 25. Diese bilden Stützkörper, deren spezifische Druckfestigkeit wesentlich größer ist als die der Stahlkörper 5 selbst. Die Riefen 23 dienen als Kanäle für ein Kühlmittel, z. B. Wasser. In Fig. 4 bildet der Zylinder den Stahlkörper 5 der Fig. 2, auf dem die Segmente 4 aufliegen. Ein zweites gleiches Kühlsystem bilden die Stempel 7 mit den Kolben 6'. Die hier mit 24 bezeichneten Riefen liegen in den Stempeln 7. Den Riefen 24 wird beim Gebrauch der Hochdruckkammer ein Kühlmittel durch nicht gezeigte axiale Bohrungen in den Stempeln 7 zugeführt.

Das Kühlmittel fließt dann weiter zu den Riefen 23 und durch diese zu den Riefen 24 des unten liegenden Stempels 7. Von hier wird es durch radiale Bohrungen im Stempel 7 abgeleitet.

In der Hochdruckkammer sitzen zwei Behälter 9 und 10. Sie sind vorzugsweise dünnwandig, z. B. 1 mm stark und bestehen aus Glas oder Molybdän oder Eisen oder aus anderen Stoffen. Der Behälter 9 enthält z. B. Graphitpulver und als Katalysator ein Pulver, z. B. aus Eisen, Nickel oder Wolfram. Der Behälter 10 enthält einen Stoff, der sich beim Erhitzen stark ausdehnt, z. B. Kochsalz. Der Behälter 10 kann z. B. auch durch einen festen Körper, z. B. aus Eisen, ersetzt werden, er muß aber dann größer werden, weil der Ausdehnungskoeffizient von Eisen relativ klein ist.

Die Behälter 9 und 10 sind von Heizelementen 20 und 21 umgeben, denen je für sich ein Strom einstellbarer Stärke zugeführt werden kann. Dies geschieht über die beiden Preßstempelpaare 7 und 8 und die Kolben 6' und 6, die sämtliche durch eine Isolation, z. B. durch eine dünne Glimmerschicht 26, gegenüber den Segmenten 4 und dem Zylinder 5 isoliert sind. Die Kolben 6 bilden je eine Kontaktstelle 27, an der die Zuleitungen 28 der Heizelemente anliegen. Der Zylinder 5 ist geerdet. Am Zylinder 5 liegen die Enden 29 der Heizelemente an, so daß er zugleich als Rückleitung für den Heizstrom dient.

Der Zylinder 5 ist mit einem wärmeisolierenden Pulver 22, z. B. mit Silbersulfatpulver, gefüllt, Hierin sind die Behälter 9 und 10 und die Heizelemente 20 und 21 eingebettet.

Vor Beginn einer Arbeitscharge wird in einer Hilfsvorrichtung aus den Teilen 9, 10, 20, 21 und aus dem Isolierpulver 22 ein zylindrischer Körper gebildet, dessen Durchmesser etwas geringer ist als der Innendurchmesser des Zylinders 5, dessen Höhe aber größer ist als die in Fig. 3 gezeigt und etwa der Höhe des Zylinders 5 entspricht. Dieser Körper wird in den Zylinder eingesetzt und dann mit Hilfe der Kolben 6, 6' und der Preßstempel 7, 8 so weit zusammengepreßt, wie dies in Fig. 3 gezeigt ist. Die anfängliche Höhe des zylindrischen Körpers ist so bemessen, daß in der Endstellung des Preßstempels 7 in Fig. 3 in der innerhalb des Zylinders 5 befindlichen Hochdruckkammer ein Druck von etwa 40 kb erreicht wird. Nunmehr wird das Heizelement 21 eingeschaltet. Das Kochsalz im Behälter 10 wird erhitzt. Es dehnt sich aus und der Druck in der Hochdruckkammer steigt, bis etwa ein Druck von 70 kb oder mehr erreicht ist. Dann wird auch das Heizelement 20 eingeschaltet und die Umwandlung des Graphits in Diamanten durchgeführt. Sinkt dabei, wie üblich, der Druck in der Hochdruckkammer, dann kann mit dem Heizelement 21 der Druck durch Nachheizen wieder erhöht werden.

Die bei der Umwandlung des Graphits von den Heizelementen 20 und 21 zum Zylinder 5 bzw. zu den Kolben 6 und 6' fließende Wärme wird durch ein Kühlmittel abgeführt, das die Riefen 23 und 24 durchströmt. Es wird so jede unzulässige Erwärmung der die Hochdruckkammer begrenzenden Stahlkörper vermieden.

Der Druck in der Hochdruckkammer kann so lange auf einem hohen Wert gehalten werden, bis das Graphitpulver in Diamanten umgewandelt ist. Ist dies geschehen, dann werden die Heizelemente 20 und 21 abgeschaltet. Die Kammertemperatur nimmt langsam ab, die Preßstempel 7 werden entlastet, der Druck in der Hochdruckkammer sinkt auf Null. Die Hochdruckkammer kann geöffnet werden.

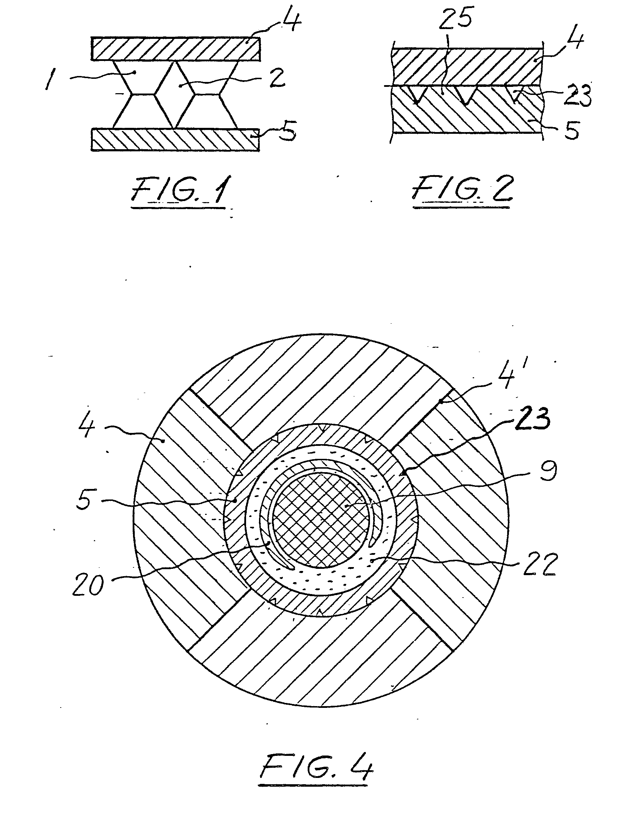

Fig. 1 zeigt ein Kühlsystem, bei dem zwischen den Stahlkörpern 5 und 4 Stützkörper 1 aus Stahl liegen, die die Form eines Kegelstumpfes haben. Sie stehen mit ihren kleinen Endflächen aufeinander und begrenzen Kanäle 2, durch die ein Kühlmittel fließen kann. Diese Form der Stützkörper ist besonders günstig, da sie einem höheren spezifischen Druck standhalten als sonst für den betreffenden Stahl zulässig ist.

Als Stützkörper zwischen den Stahlkörpern 5 und 4 können mit Vorteil auch Diamant- oder Bornitridkristalle verwendet werden, zwischen denen ein Kühlmittel, z. B. Wasser, fließen kann.

Das Kühlystem nach Fig. 2 kann dahin abgeändert werden, daß die Riefen 23 auch in der Wand des Stahlkörpers 4 angebracht werden. Die Riefen in dieser Wand können dabei parallel zu den in der Wand des Stahlkörpers 5 oder unter einem Winkel dazu verlaufen, z. B. unter einem Winkel von 90°.

Werden Stützkörper aus Diamant- oder Bornitridkristallen verwendet, dann müssen diese möglichst gleiche Abmessungen haben.

Es wird bemerkt, daß die Kolben 6' aus Hartmetall bestehen sollen, das eine Druckfestigkeit von mehr als 50 kb hat. Die Kolben 6 brauchen keine so hohe Festigkeit zu haben, da sie vom Stahlkörper 5 abgestützt werden. Gemäß Fig. 3 stützen die konischen Flächen der Segmente 4 und die Preßstempel 7 einander. Die Flächen 4' der Segmente 4 stützen sich gegenseitig.

Ein geeignetes Material für die Segmente 4 ist der schwedische Stahl C 550 von Wikmanshyttan, der einen Druck von 106 kb zuläßt, wenn seine Temperatur 90 °C nicht überschreitet. Die höchste Temperatur der Kühlflüssigkeit bzw. des Kühlsystems muß also niedriger sein als 90°. Ein anderer geeigneter Stahl ist der schwedische Stahl D 941 von Fagersta, der eine Temperatur von 200 °C oder mehr zuläßt.

**Patentansprüche**

1. Verfahren zur Umwandlung von Stoffen unter Anwedung derart hoher Drucke und hoher Temperaturen, wie sie zur Umwandlung von Graphit in Diamant erforderlich sind, in der Weise, daß der umzuwandelnde Stoff in einer aus festen und beweglichen Stahlkörpern zusammengesetzten Hochdruckkammer mit Hilfe einer auf die beweglichen Teile der Kammer einwirkenden Presse unter Druck gesetzt und durch ein in der Kammer befindliches Heizelement erhitzt wird, das von der Kammerwandung durch ein wärmeisolierendes Mittel getrent wird, wobei der in der Kammer mit Hilfe der Presse erzeugte Druck durch Erhitzen eines in der Kammer befindlichen Druckerzeugungsstoffes erhöht oder zumindest aufrechterhalten wird, dadurch gekennzeichnet, daß als Druckerzeugungsstoff Kochsalz in die Kammer eingebracht wird.

2. Vorrichtung zur Umwandlung von Stoffen unter Anwendung hoher Drucke und hoher Temperaturen, insbesondere von Graphit in Diamant, mit einer aus festen Stahlkörpern (4, 5) und beweglichen Stahlkörpern (6, 6') zusammengesetzten Hochdruckkammer, auf die beweglichen Teile (6, 6') der Hochdruckkammer einwirkende Preßstempel (7, 8), in der Hochdruckkammer angeordnete Heizelemente (20, 21), die von der aus den Stahlkörpern (5) gebildeten Kammerwandung durch ein wärmeisolierendes Mittel (22) getrennt sind und mit einer Kühleinrichtung, dadurch gekennzeichnet, daß in dem die Hochdruckkammer bildenden Stahlkörper (5) und in den Preßstempeln (7) Kühlkanäle (23, 24) für die Aufnahme eines flüssigen Kühlmittels angeordnet sind.

3. Vorrichtung nach Anspruch 2, dadurch gekennzeichnet, daß die Kühlkanäle (23) zwischen zwei Stahlkörpern (4, 5) angeordnet sind.

4. Vorrichtung nach Anspruch 3, dadurch gekennzeichnet, daß die Stahlkörper (5, 4) durch Kanäle (2) begrenzende kleine Stützkörper (1) im Abstand voneinander gehalten werden.

5. Vorrichtung nach Anspruch 4, dadurch gekennzeichnet, daß die Stützkörper (1) aus Stahl bestehen und die Form von Kegelstümpfen haben.

6. Vorrichtung nach Anspruch 4, dadurch gekennzeichnet, daß die Stützkörper (1) Diamantkristalle oder Bornitridkristalle sind.

7. Vorrichtung nach Anspruch 3, dadurch gekennzeichnet, daß die Stahlkörper (5, 4) stellenweise aneinander anliegen und die Kühlkanäle (23) durch Riefen in mindestens einer Wandfläche der Stahlkörper (5, 4) gebildet sind.

**Revendications**

1. Procéde pour la tranformation de substances en utilisant des pressions et des températures élevées, telles que celles nécessaires pour la transformation du graphite en diamant, suivant lequel la substance à tranformer est mise sous pression dans une chambre à haute pression, composée de corps d'acier fixes et mobiles, à l'aide d'une presse agissant sur les parties mobiles de la chambre, et est chauffée par un élément chauffant, qui est placé dans la chambre, et qui est séparé de la paroi de la chambre par un agent calorifuge, la pression produite dans la chambre à l'aide de la presse étant accrue, ou tout au moins maintenue, par chauffage d'une substance génératrice de pression, située dans ladite chambre, procédé caractérisé par le fait que du sel de cuisine est introduit dans la chambre comme substance gèneratrice de pression.

2. Dispositif pour la transformation de substances en utilisant des pressions et des températures élevées, notamment pour la transformation de graphite en diamant, comportant une chambre à haute pression, constituée par des corps fixes en acier (4, 5) et des corps mobiles en acier (6, 6'), des pistons de presse (7, 8), agissant sur les corps mobiles (6, 6') de la chambre à haute pression, des éléments chauffants (20, 21), qui sont disposés dans la chambre à haute pression, et qui sont séparés de sa paroi, formée par les corps fixes en acier (5), par un agent calorifuge (22), ainsi qu'un dispositif de refroidissement, dispositif caractérisé par le fait que des canaux de refroidissement (23, 24), destinés à recevoir un réfrigérant liquide, sont disposés dans le corps fixe en acier (5), constituant la chambre à haute pression, ainsi que dans les pistons de presse (7).

3. Dispositif selon la revendication 2, caractérisé par le fait que les canaux de refroidissement (23) sont disposés entre deux corps en acier (4, 5).

4. Dispositif selon la revendication 3, caractérisé par le fait que les corps en acier (5, 4) sont maintenus écartés les uns des autres par de petits supports (1), délimitant des canaux (2).

5. Dispositif selon la revendication 4, caractérisé par le fait que les supports (1) sont en acier et ont la forme de troncs de cône.

6. Dispositif selon la revendication 4, caractérisé par le fait que les supports (1) sont des cristaux de diamant ou de nitrure de bore.

7. Dispositif selon la revendication 3, caractérisé par le fait que les corps en acier (5, 4) sont appliqués localement les uns sur les autres, et que les canaux de refroidissement (23) sont formés par des rainures dans la surface de l'une au moins des parois des corps en acier (5, 4).

**Claims**

1. A method for transforming materials using high pressures and high temperatures, like those necessary for transforming graphite to diamond, in such a way that the material to be transformed is placed under pressure in a high-pressure chamber, composed of rigid and mobile steel members, by means of a press acting on the mobile parts of the chamber, and is heated by a heating element which is in the chamber and is separated from the chamber wall by heat insulating means, the pressure produced in the chamber by means of the press being increased or at least maintained by heating a pressurizing material in the chamber, characterized in that common salt is introduced into the chamber as the pressurizing material.

2. An apparatus for transforming materials using high pressures and high temperatures, in particular graphite into diamond, with a high-pressure chamber, which is composed of rigid steel members (4, 5) and mobile steel members (6, 6'), press rams (7, 8) which act on the mobile parts (6, 6') of the high-pressure chamber, heating elements (20, 21), which are disposed in the high-pressure chamber and are separated from the chamber wall, formed by the steel members (5), by a heat insulating means (22) and with a cooling device, characterized in that cooling ducts (23, 24), for accommodating a fluid coolant, are disposed in the steel member (5), which forms the high-pressure chamber, and in the press rams (7).

3. An apparatus according to claim 2, characterized in that the cooling ducts (23) are disposed between two steel members (4, 5).

4. An apparatus according to claim 3, characterized in that the steel members (5, 4) are kept at a distance from each other by small supports members (1), which define ducts (2).

5. An apparatus according to claim 4, characterized in that the support members (1) consist of steel and have the shape of truncated cones.

6. An apparatus according to claim 4, characterized in that the support members (1) are diamond crystals or boron nitride crystals.

7. An apparatus according to claim 3, characterized in that the steel members (5, 4) bear against each other at points and the cooling ducts (23) are formed by grooves in at least one wall surface of the steel members (5, 4).

FIG. 1

FIG. 2

FIG. 4

FIG. 3

2